# EUROPEAN PATENT APPLICATION

(11) **EP 1 096 375 A2**
(43) Date of publication of application: **02.05.2001**
(21) Application number: 00309515.5
(22) Date of filing: 27.10.2000
(51) Int. Cl.: G06F 9/445

(54) **Apparatus and method for a system friendly inquiry response to simulate connectivity interchange between devices and a host computer**

(30) Priority: 29.10.1999 US 430332
(71) Applicant: Hewlett-Packard Company, A Delaware Corporation, Palo Alto, CA 94304 (US)
(72) Inventor: Arp, Ronald K., Greeley, CO 80634 (US); Bain, Jeffrey J., Greeley, CO 80631 (US)
(74) Representative: Colgan, Stephen James

(57) **Abstract**

A method and apparatus for determining an inquiry response in response to a command sent to an address (108, 110, 112) on a computer hardware component (106), wherein the inquiry response is determined independently of the ability of a device (114, 116, 118) associated with the address to respond to the command; and for causing the inquiry response to be returned to a host computer (104).

## Description

### Field of the Invention

This invention pertains to the field of computer devices, and more particularly, to an apparatus and a method for a system friendly inquiry response to simulate connectivity communication between devices and a host computer.

### Background of the Invention

This invention originates from a need to bridge the communication gap between a device and a host computer in situations where the device cannot respond to the host computer. A device is a computer subsystem, such as a disk drive, printer, or modem that can be connected to a computer through a socket. A device an be accessed by referencing an address corresponding to a socket that the device is connected to.

A communication gap between a device and a host computer commonly exists in operating systems that do not support dynamic device mapping. Dynamic device mapping is the ability for an operating system to configure a device for use after the system has been initialized. In systems that do not support dynamic device mapping, all devices that will be used by the computer must be up and communicating before the computer looks for them. If a device is not responsive when the computer is switched on (it may be physically absent, or just not varied on), the operating system assumes that the device is not available at all, and will not configure itself to use the particular device. As a result, if the device becomes available at a later time, the computer must be shut down and restarted in order to add the device. Similarly, if a device that has already been configured for use by a computer subsequently fails, is varied off, or is removed, and a device is unresponsive when it is accessed, a typical operating system will cease to recognize the location. If the device is later varied on, fixed, and/or replaced, the computer must be reinitialized in order for the device to be recognized again.

Where a computer is a server in a network of computers, the computer cannot simply be rebooted without careful planning. Since there may be any number of users using a computer in the network at any given time, shutting down the server may cause many users to lose unsaved information, and may interrupt processes such as a payroll run. In existing systems, this problem may be dealt with by enabling dynamic device mapping. However, this is a complex and costly task, requiring extensive modifications to the operating system.

Another situation in which a communication gap may exist arises in the context of linear device searching. When a computer is initialized, a typical operating system searches for devices by performing a linear search on the addresses of potential device locations. If a device is found at a given address, the operating system configures itself to use the device by querying the device for configuration information. If an address is encountered on which there is an unresponsive device, a typical operating system will abort its search. As a result, if a device is inadvertently missing, or is varied off, the device, as well as devices located at subsequent addresses, will be undetected. Where an operating system finds an autochanger (a device comprising a number of other devices), at a given address, the operating system then checks the sub-addresses associated with the autochanger until an invalid sub-address is found or all sub-addresses are checked. Under this search scenario, devices with gaps in the sub-addresses will not be detected. If an undetected device is needed at a later time, the device must be manually added, if the operating system allows it. If the operating system does not allow a device to be manually added, it is completely omitted from the system configuration if left undetected at system initialization.

Of course, one solution could be to search all addresses of the computer, as some operating systems do. However, since there may potentially be millions of devices connected to a computer (at least in terms of virtual locations), a linear search of every potential address is an unfeasible solution. In the case of an autochanger, the operating system can also query the autochanger for a list of valid addresses. Although much faster than checking for every possible address, the operating system still ends up with the same information - if there are any invalid addresses, the computer must be rebooted if devices are subsequently added to those addresses.

A need exists, therefore, for a way to bridge the communication gap between devices and a host computer to minimize problems encountered when a device does not respond to the host computer.

### Summary of the Invention

This invention is, in general, directed to an apparatus and a method for a system friendly inquiry response for simulating connectivity interchange between devices and a host computer.

Thus, the invention may comprise an apparatus for simulating connectivity interchange between devices and a host computer, comprising a number of computer readable media; and computer readable program code stored on the computer readable media, the code comprising program code for determining an inquiry response in response to a command sent to one of the addresses on a computer hardware component, wherein the inquiry response is determined independently of the ability of a device associated with one of the addresses to respond to the command; and program code for causing the inquiry response to be returned to the host computer.

The invention may further comprise an apparatus for simulating connectivity interchange between devices and a host computer, comprising means for determining an inquiry response in response to a command sent to one of the addresses on a computer hardware component, wherein the inquiry response is determined independently of the ability of a device associated with one of the addresses to respond to the command; and means for causing the inquiry response to be returned to the host computer.

The invention may still further comprise a method for simulating connectivity interchange between devices and a host computer, comprising determining an inquiry response in response to a command sent to one of the addresses on a computer hardware component, wherein the inquiry response is determined independently of the ability of a device associated with one of the addresses to respond to the command; and causing the inquiry response to be returned to the host computer.

### Brief Description of the Drawing

An illustrative and presently preferred embodiment of the invention is illustrated in the drawing in which:

FIG. 1 illustrates an apparatus for a system friendly inquiry response for simulating connectivity interchange between devices and a host computer.

FIG. 2 illustrates a method for a system friendly inquiry response for simulating connectivity interchange between devices and a host computer.

FIG. 3 depicts an apparatus for a system friendly inquiry response for simulating connectivity interchange between devices and a host computer as operable in a preferred and illustrative embodiment.

FIG. 4 depicts a method for a system friendly inquiry response for simulating connectivity interchange between devices and a host computer as operable in a preferred and illustrative embodiment.

### Description of Preferred Embodiments

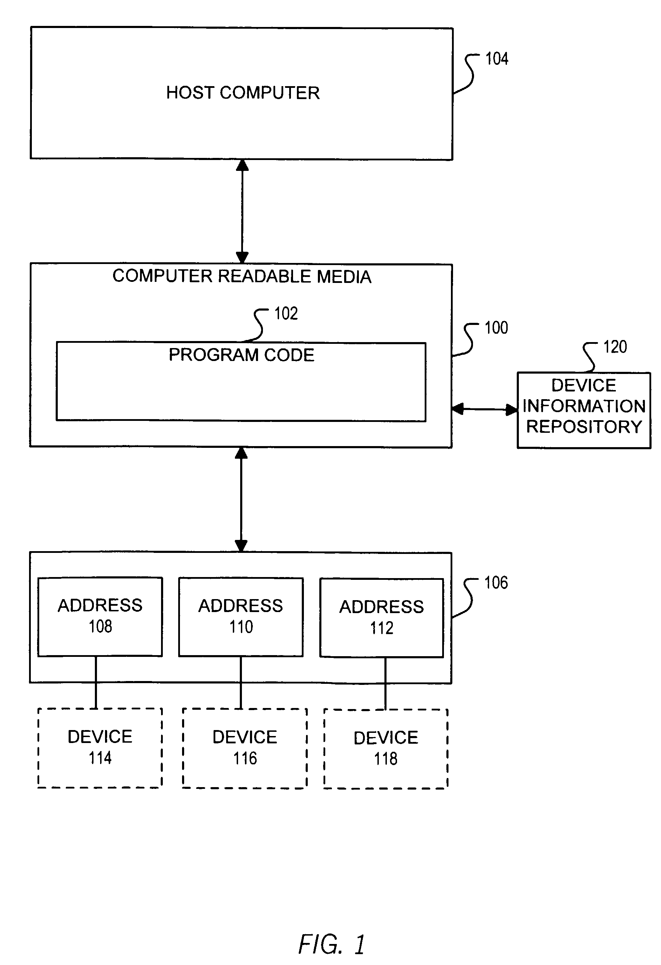

FIG. 1, in general, illustrates an apparatus for a system friendly inquiry response (hereinafter "inquiry response") for simulating connectivity interchange between devices and a host computer. It comprises computer readable media 100, and program code 102 for determining and returning an inquiry response in response to a command about devices 114, 116, 118, each of which is associated with an address 108, 110, 112 corresponding to a socket (not shown) on a computer hardware component 106. In a preferred embodiment, a command is a request sent from an operating system of a host computer 104 to a address for obtaining certain information about a device associated with a address, where the specific command is dependent on the type of devices that are used, and the interface that is used by the devices to communicate with the host computer. A command may also be any general type of inquiry that is sent for the purpose of obtaining information from or about the device, and may be sent from any computer process. An inquiry response is a response to a command sent to a address. It is system friendly because it enables connectivity interchange between devices and a host computer by simulating communication, allowing processing to resume as though all devices are connected. An inquiry response is independent of a device's ability to respond to the inquiry command, and is returned to the host computer. The apparatus may also comprise a device information repository 120. A device information repository is a database of device configuration information for a number of expected devices. An expected device is a device that has been predetermined to be a device that should be connected to a given socket, and therefore, associated with an address corresponding to the socket. A device information repository comprises a table of all addresses that correspond to the sockets on a computer hardware component, and the identity of the device (device I.D.) and device configuration information for each expected device. A device connected to a socket at a given address is a supported device if its device I.D. matches the expected device I.D. at the given address.

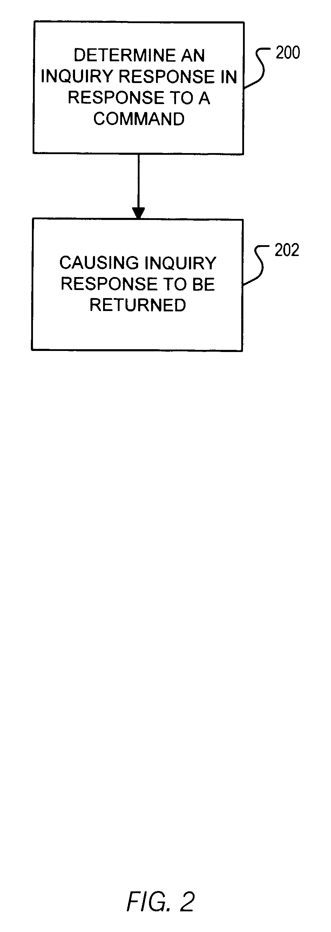

FIG. 2, in general, illustrates a method for simulating connectivity interchange between devices and a host computer. It comprises determining an inquiry response in response to a command sent a address, independently of the ability of a device associated with the address to respond to the command 200, and causing the inquiry response to be returned to the host computer 202.

Throughout the application, terms should be associated with their meaning as follows, unless otherwise indicated:
- Host computer: a component which desires to communicate with devices.
- Socket: a connecting port of a device.
- Address: an I.D. associated with a given socket that is used to reference a device connected to, or associated with, the socket.
- Device: a computer hardware component, such as a printer, modem, or a disk drive.

### Introduction

In a preferred embodiment, a host computer is connected to an autochanger to communicate with devices in an autochanger. An autochanger is a device itself that can directly communicate with a host computer, and which can hold a number of other devices, allowing the other devices to indirectly communicate with the host computer through the autochanger. In one specific exemplary system, the autochanger devices are storage devices such as Quantum DLT-8000 tape drives, and a robotics controller for loading and unloading the drives. One example of an autochanger is a Hewlett-Packard 7200 series DLT library with a Fibre Channel interface. A Fibre Channel interface manages communication to the drives and the controller. The Fibre Channel interface converts serial Fibre Channel SCSI (Smaller Computer Systems Interface) commands sent by a host computer to parallel SCSI commands recognized by the autochanger devices. (Fibre Channel and SCSI are both ANSI specified interfaces for computers and peripheral devices.) In this exemplary embodiment, a host computer, such as a Hewlett-Packard, Compaq, or Dell, is connected to the autochanger through a Fibre Channel interface host bus adapter. The host computers referred to in this exemplary embodiment use some operating system such as UNIX or Windows NT 4.0. The connection to the autochanger is through a Fibre Channel cable using a Fibre Channel host bus adapter in the computer and one of the ANSI standard Fibre Channel topologies. The Fibre Channel interface in the autochanger consists of hardware and software to convert from Fibre Channel to parallel SCSI. Parallel SCSI is used to communicate with the autochanger storage devices and the robotics controller.

It is to be understood that the above exemplary system is described only for aid in understanding the invention and is not intended to limit the scope of the invention. Thus, it is to be understood that any type of host computer using any type of operating system (e.g., a Macintosh computer running Macintosh OS 8.5) could be used in association with any type of peripheral devices (e.g., optical scanners or laser printers) connected by any conventional or later developed signal transfer medium (e.g., an infrared system or "firewire" system) without departing from applicants' invention.

As described in detail below, the host computer desiring to communicate with the autochanger devices sends commands to device addresses. Whether or not a device responds, an inquiry response is returned to the host computer to simulate a device connection.

### Apparatus

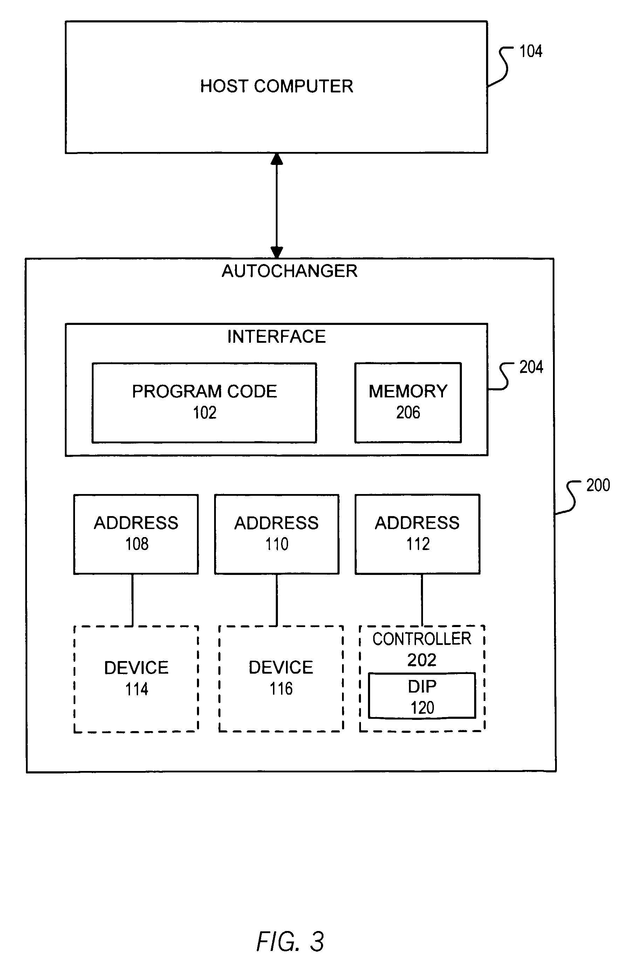

FIG. 3 illustrates an apparatus in a preferred embodiment, wherein an autochanger 200 is a computer hardware component comprising addresses 108, 110, 112 corresponding to sockets on the autochanger which devices 114, 116, 202 can be connected to, and where one of the devices is an autochanger controller 202. An apparatus comprises program code 102 that determines an inquiry response in response to a command sent to a device address of the autochanger. The apparatus may also comprise an interface 204 between a host computer 104 and devices associated with the addresses of the autochanger. In a preferred embodiment, an interface is a Small Computer System Interface (SCSI, a standard high-speed parallel interface device defined by the American National Standards Institute (ANSI)) that is used to connect a computer to SCSI peripheral devices, such as hard disks and printers, as well as to other computers and local area networks. The interface may alternatively be program code embedded in the autochanger for facilitating communication between the host computer and devices associated with the autochanger. In a preferred embodiment, program code 102 is embedded in the interface 204.

An apparatus in a preferred embodiment may also comprise an autochanger controller 202. An autochanger controller is a device that resides on the autochanger which controls the host computer's access to the other devices on the autochanger. In a preferred embodiment, the autochanger controller is associated with an address on the autochanger, and comprises the device information repository 120.

An apparatus in a preferred embodiment may additionally comprise an interface memory 206. The interface memory comprises information from the device information repository for the purpose of providing the interface with faster access to device information. In a preferred embodiment, the interface memory is internal to the interface. Where the interface is a SCSI interface, as in a preferred embodiment, the interface memory is part of the SCSI device as random-access memory (RAM) or as read-only memory (ROM). Where interface memory is implemented as RAM, device information is initialized with information from the device information repository at each system initialization, updated when device information changes, and retrieved from the interface memory by the interface when device information is needed. Interface memory may alternatively be ROM, wherein device information is hard-coded into the interface memory, such that the interface memory serves as the device information repository. Where the interface is program code, the interface memory is data memory internal to the interface, allowing the interface to track what it is doing. In either case, the interface memory is internal to the interface, and not openly accessible. In a preferred embodiment, the interface memory is a random-access memory that is initialized and updated by the device information repository.

### Method

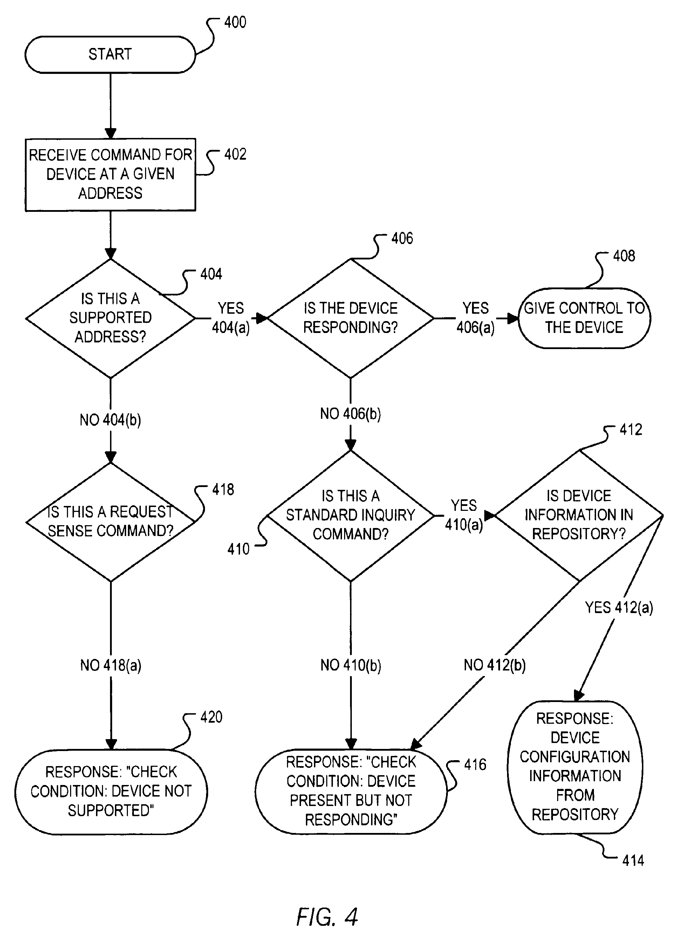

A method for a preferred embodiment is illustrated in FIG. 4. The method begins at the start block 400. A command is received for a given address 402. A number of decisions are then made 404, 406. If the address is supported 404(a) and a connected device responds to the command 406(a), then control is given to the device 408 to handle the command. If the address is supported 404(a), and no device responds (because a connected device is unable to respond, or because no device is connected at all), the response will depend on the type of command that is received 410. If the command is a Standard Inquiry Command 410(a) to determine what devices are accessible by the host computer, it is then determined if the device information is available from the device information repository 412. If it is available 412(a), then control is passed to the device, and the inquiry response is derived from the device information repository 414. If device information is not available from the device information repository 412(b), then the inquiry response is "CHECK CONDITION: DEVICE PRESENT BUT NOT RESPONDING" 416. If the command is not a Standard Inquiry Command 410(b), then the inquiry response is also "CHECK CONDITION: DEVICE PRESENT BUT NOT RESPONDING" 416.

If the address is not supported 404(b), then an inquiry response depends on the type of command received 418. If the command is not a Request Sense Command 418(a), then the inquiry response is "CHECK CONDITION: DEVICE NOT SUPPORTED" 420 for all other commands. If the command is a Request Sense Command, then the reason for the failed command (as determined by standard specifications for this command) is returned (not shown).

### Determining an Inquiry Response

An inquiry response is a response to a command sent to a device address. As described throughout this application, and in a preferred embodiment of this invention, commands sent to device addresses are sent by the host computer desiring to communicate with devices associated with the addresses. As will be discussed, a device is associated with an address in a preferred embodiment if the device is actually connected to a socket at the given address, or if the device is an expected device (as defined by the device information repository). It is also possible that a command be sent by some other process on behalf of the host computer. In either, and all possible cases, an inquiry response is returned to the host computer so that the host computer can maintain communication interchange with any given device at all times, as though the device was always connected.

An inquiry response is determined independently of a device's ability to respond. Thus, an inquiry response is returned to the host computer even if a device is not connected to the autochanger, or if a device is varied off. An inquiry response is dependent upon the type of command that is sent to a device address. An operating system may send many types of commands to a device address. In a preferred embodiment, an operating system uses commands in the ANSI (American National Standards Institute) SCSI interface specifications to communicate with devices. These specifications standardize the language that operating systems and devices use to communicate with each other. It is also within the scope of this invention that other interface specifications currently existing, or that may be developed, may also be used in this invention.

An operating system may send many different commands, and many different types of commands. Under ANSI standards, an inquiry command is a command used for identifying and preparing devices for use. An inquiry command includes a byte, called a page code, that indicates the type of inquiry command being sent. The page code allows for 256 different inquiry commands. A page code value of zero is the default inquiry command used for identifying the connected device, and is called the Standard Inquiry Command under ANSI specifications. All other page code values are for inquiry commands that are specific to a device type, vendor, or function, that provide additional information about the device, such as serial numbers, and internal revision information. What is actually reported depends on a combination of standard specifications, common practices, manufacture preferences, and product requirements. A Request Sense Command is an ANSI standard command that is sent to a device to request the reason for a command failure. At the end of all responses to commands is a status byte which indicates whether or not the command was successful. If the command was not successful, the reason for the failure can be obtained by the Request Sense Command.

An inquiry response can be determined for each command or type of command sent by an operating system. In a preferred and illustrative embodiment, two categories of commands are discussed. A first category of commands deals with inquiry commands, and the second category deals with non-inquiry commands. Within inquiry commands, there are two subcategories that are discussed in a preferred and illustrative embodiment. The first sub-category of inquiry commands comprises the Standard Inquiry Command, discussed, *supra,* and the second sub-category of inquiry commands comprises non-Standard inquiry commands. Non-inquiry commands include all commands except inquiry commands. For example, as will be discussed, the Request Sense Command is a non-inquiry command. These types of commands will be discussed in more detail in the following sections.

These two categories of commands are addressed in an illustrative and preferred embodiment of this invention. However, this invention should not be construed as being limited to these categories of commands, or as being limited to the commands mentioned herein. This invention is applicable to a wide variety of commands that may not be discussed herein, or yet developed. Furthermore, the inquiry responses discussed herein should likewise not be construed as being limited to the exact responses used herein for illustrative purposes, as being limited to the commands that they are associated with, nor as being limited to the only inquiry responses available. It should be understood that there may be a variety of inquiry responses to each command, and that there may be an inquiry response to commands not discussed herein. Those discussed herein are for illustrative purposes as operable in a preferred embodiment.

### Standard Inquiry Command

The first type of inquiry command can be encountered when a host computer attempts to configure itself for a device. This first type of inquiry command can be used by an application program or a system administration program, for example, to identify which device is being used. A Standard Inquiry Command can also be used at system startup, when the operating system of the host computer takes inventory of computer sockets to determine what devices it may need to communicate with. The operating system does this by referencing all known socket addresses. In a preferred embodiment, an operating system finds an autochanger, and then searches the autochanger sub-addresses to determine what devices are connected to the autochanger. The operating system makes this determination by making an inquiry about the type of device at a given address. In ANSI specifications, the command used is the Standard Inquiry Command.

The expected response to a Standard Inquiry Command is device configuration information for a device associated with a given address. Device configuration information includes information such as device type (e.g., tape), vendor, and product, but the actual device configuration information depends on the connected device. The device configuration information allows the host computer to configure itself for communicating with and/or using the device. For example, operating systems use this information to load a standard device interface controller for different types of devices. In some cases, the device interface controller also uses the additional vendor, product, and device information for additional configuration support. In addition, the device information can be stored in internal records for access by various application programs. For example, tape backup applications will look through the system device information for supported tape drives upon which to backup data.

In existing systems, if the operating system receives a response from a given address, it will configure itself for using the device connected to the socket at that address (usually with information provided by the device itself). If the operating system does not receive a response, then the operating system assumes that the socket is empty even though a device may actually be connected but unable to respond. As a result, if the device subsequently regains its ability to respond (by being connected, or varied on, for instance), the computer must be shut down and rebooted in order to add the device. Moreover, if the operating system does not find a device at a given address, it will discontinue searching for devices at the remaining addresses. In existing systems, therefore, a response is dependent upon a particular device responding. In the present invention, a response is independent of a particular device's ability to respond, so that the operating system always receives a response. This tricks the host computer into thinking that a device is actually connected, and allows it to configure itself for using the device, and allows it to continue searching for other devices.

When a Standard Inquiry Command is called on a given address, the device information repository is consulted to determine if the address is supported. An address is supported if there should be a device connected to a socket associated with the given address according to the device information repository. If an address is a supported address, one of two things can happen. If a device is actually located at the supported address, and the device responds, then in a preferred embodiment, control is surrendered to the device to return a response to the operating system, regardless of whether the device is a supported device. (The determination of whether a device responds is made according to interface specifications. In a preferred embodiment, they are made according to ANSI specifications.) In this case, the inquiry response is device configuration information that is determined at the time the device is manufactured, and is internal to the device. It is also within the scope of this invention that device configuration information be provided by a mechanism external to the device even when the device has the ability to respond itself. This could be implemented, for example, by retrieving device configuration information from the device information repository rather than giving control to the device.

In an alternative embodiment, if a device is located at a supported address, an additional inquiry can be made to determine if the device is a supported device. This determination could be made, for example, by intercepting the device's response to the Standard Inquiry Command, and then comparing that information with the information for the expected device, or the device that should be located at the given address according to the device information repository. If the device information matches, then the device is a supported device, and the response received from the connected device is passed to the operating system. If the device information does not match, then the device is not a supported device. In this case, there can be different inquiry responses that are implementation specific. One inquiry response can be a "CHECK CONDITION: DEVICE NOT SUPPORTED" inquiry response if the device does not allow unsupported devices. Another inquiry response can be a "CHECK CONDITION: DEVICE PRESENT BUT NOT RESPONDING" inquiry response if a particular system implementation allows an unsupported device, and the unsupported device is not able to respond to the command.

If the given address is a supported address, and there is no device connected to the socket at the given address, or a connected device does not respond, then device configuration information for the expected device is returned to the operating system as the inquiry response. If an unresponsive, connected device is not a supported device, there can be one of several responses that are implementation specific. As described above, if a particular system implementation does not allow unsupported devices, an unsupported, connected device may be rejected by first performing a supported device check, and the inquiry response would be "CHECK CONDITION: DEVICE NOT SUPPORTED". Alternatively, if it would be valid for a device other than the expected device to be connected at a supported address (i.e., a system knows that all of its devices should be tape drives, so that a specific tape drive does not need to be located at a specific address) under this scenario, then a "CHECK CONDITION: DEVICE PRESENT BUT NOT RESPONDING" inquiry response is returned. Or, an unsupported, unresponsive, and connected device may be accepted, and if an operating system subsequently sends a command to the device address, the operating system can change its configuration based on the response received from the connected device. If device configuration information for the expected device is ever unavailable, then the inquiry response is "CHECK CONDITION: DEVICE PRESENT BUT NOT RESPONDING".

If the address is an unsupported address, then the inquiry response returned is "CHECK CONDITION: DEVICE NOT SUPPORTED", even if a device is connected.

### Other Inquiry Commands

If the inquiry command from the operating system of the host computer is any other type of inquiry command, then the general class of inquiry responses is that of the device status. If the address is a supported address, and a device is present and responding, then control is passed to the device to handle the inquiry command. If an address is a supported address, and the device is not present, or does not respond, then the inquiry response returned is "CHECK CONDITION: DEVICE PRESENT BUT NOT RESPONDING". On the other hand, if an address is an unsupported address, then a "CHECK CONDITION: DEVICE NOT SUPPORTED" inquiry response is returned.

### All Other Commands

For all other commands, if an address is a supported address, and a device responds, control is given to the device that is actually connected to return the inquiry response. If an address is a supported address, and no device is present, or a present device does not respond, then the inquiry response is "CHECK CONDITION: DEVICE PRESENT BUT NOT RESPONDING". If an address is not a supported address, then the inquiry response is "CHECK CONDITION: DEVICE NOT SUPPORTED" *unless* the command is a Request Sense Command. If the command is a Request Sense Command, then the reason for the failed command is returned in accordance with ANSI specifications.

### Preferred Mode of Operation

In a preferred embodiment, information in the device information repository is written to a memory internal to the autochanger interface at system startup, and updated by the device information repository whenever information in the repository changes. This allows the interface to retrieve device information more efficiently, and also allows the interface to respond for the autochanger controller if the controller should fail to respond. However, device information may alternatively or conjunctively be retrieved directly from the device information repository. For instance, autochanger controller information could be downloaded to the interface's internal memory, and information about all other devices could remain in the device information repository. Also in a preferred embodiment, an interface between the host computer and the autochanger devices determines the inquiry response for all commands. It also returns all inquiry responses to the host computer.

### Conclusion

In both apparatus and method, a command about a device located at an address of an autochanger is made, and an inquiry response is returned to the host computer. In a preferred embodiment, the inquiry response is obtained and returned to the host computer by the interface. In a preferred embodiment, there are four types of inquiry responses, some of which are dependent upon the actual command that is sent. For all commands, if an address is a supported address, and a device is present and responding, control is given to the connected device to respond to the command. (In alternative embodiments, as discussed, *supra,* the connected device must also be a supported device.) For all commands, *except* for the Request Sense Command, if an address is not have a supported address, the inquiry response is "CHECK CONDITION: DEVICE NOT SUPPORTED". (For the Request Sense Command, a reason for a command failure, as defined by ANSI specifications in a preferred embodiment, is returned.) By informing the host computer of invalid addresses, the host computer is prevented from accessing those locations. Furthermore, in alternative embodiments, wherein a connected device must be a supported device, the device could be subsequently added without having to reboot the computer.

If an address is a supported address, and no device responds (because no device is present, or a connected device is unable to respond), then the inquiry response is dependent upon the type of command sent. If the command is a Standard Inquiry Response, then the inquiry response is the device configuration information obtained from the device information repository for the given address. This tricks the computer into thinking that a device is present. By receiving an inquiry response in the form of device configuration information at initialization, the host computer can configure itself for using the device, and then continue to search the other addresses.

If the command is any other type of command for an address that is a supported address, or if no device configuration information is available for supported device, then the inquiry response is "CHECK CONDITION: DEVICE PRESENT BUT NOT RESPONDING". By receiving device status information, the host computer is also tricked into believing that a device is present. As a result, if the host computer tries to access an unresponsive device, the inquiry response will prevent the host computer from disabling an address associated with the unresponsive device.

By informing the host computer which addresses are valid and invalid, a host computer is able to be setup and used as a complete system. In addition, when real devices are added or removed from the system, the host computer does not require a reboot to be reconfigured. This also provides for a consistent system configuration because the host computer will obtain the same configuration information every time, independently of the real state of all connected devices. This approach can be used on all current operating systems, eliminating the need for modifications and extensive testing of the operating systems, as well as new systems that do support dynamic device connections. Furthermore, the solution is device independent: it can be implemented by any peripheral which wants to be able to remove parts of the system while the system is up and running.

While an inquiry response has been described throughout this description as a response to a command sent by an operating system of a host computer, it should be understood that an inquiry response can also be determined in response to a general inquiry about the status of a device. For example, in determining a LUN (logical unit) report for an autochanger, a LUN scan could report all valid addresses using methods described above. Thus, if a given address has a supported device that does not respond, the scan would return an inquiry response (either the status of the device or device configuration information), and the LUN report would state that the particular address is valid. A host computer as described in this case would be the component requesting the LUN report, such as a master device.

While illustrative and presently preferred embodiments of the invention have been described in detail herein, it is to be understood that the inventive concepts may be otherwise variously embodied and employed, and that the appended claims are intended to be construed to include such variations, except as limited by the prior art.

## Claims

1. An apparatus for simulating connectivity interchange between devices and a host computer, comprising:
a. a number of computer readable media (100); and
b. computer readable program code (102) stored on said number of computer readable media, comprising:
i. program code for determining an inquiry response in response to a command sent to a given one of at least one address (108, 110, 112) on a computer hardware component (106), wherein said inquiry response is determined independently of the ability of a device (114, 116, 118) associated with said given one of at least one address to respond to said command; and
ii. program code for causing said inquiry response to be returned to said host computer (104).

2. An apparatus as in claim 1, wherein said program code (102) for determining an inquiry response in response to a command sent to a given one of at least one device on a computer hardware component (106) comprises program code for determining the type of said command sent.

3. An apparatus as in claim 2, wherein said program code (102) for determining said inquiry response in response to a command sent to a given one of at least one address (108, 110, 112) comprises:
a. program code for determining that said command is a Standard Inquiry Command; and
b. program code for determining that said inquiry response is device configuration information for a device associated with said given one of at least one address, where said device configuration information is retrieved from a device information repository (120).

4. An apparatus as in claim 1, wherein said program code (102) for determining an inquiry response in response to a command sent to a given one of at least one address (108, 110, 112) on a computer hardware component (106) comprises program code for determining that said command is a Standard Inquiry Command, and for determining that said inquiry response in response to said Standard Inquiry Command is device configuration information for a device associated with said given one of at least one address.

5. An apparatus as in claim 4, wherein said program code (102) for determining that said inquiry response in response to said Standard Inquiry Command is device configuration information for a device (114, 116, 118) associated with said given one of at least one address (108, 110, 112) comprises program code for determining that said inquiry response in response to said Standard Inquiry Command is device configuration information for an unresponsive said device associated with said given one of at least one address.

6. An apparatus as in claim 1, wherein said program code (102) for determining an inquiry response in response to a command sent to a given one of at least one address (108, 110, 112) on a computer hardware component (106) comprises program code for determining an inquiry response based on a number of the following factors:
a. the type of command sent;
b. whether a device (114, 116, 118) associated with said given one of said at least one address (108, 110, 112) is a supported device;
c. whether said given one of said at least one address is a supported address; and
d. whether said device associated with a given one of said at least one address has the ability to respond to said command.

7. A method for simulating connectivity interchange between devices and a host computer, comprising:
a. determining an inquiry response in response to a command sent to a given one of at least one address (108, 110, 112) on a computer hardware component (106), wherein said inquiry response is determined independently of the ability of a device (114, 116, 118) associated with said given one of at least one address to respond to said command; and
b. causing said inquiry response to be returned to said host computer (104).

8. A method as in claim 7, wherein said determining an inquiry response in response to a command sent to a given one of at least one address (108, 110, 112) on a computer hardware component (106) comprises determining the type of said command sent.

9. A method as in claim 7, wherein said determining an inquiry response in response to a command sent to a given one of at least one address (108, 110, 112) on a computer hardware component (106) comprises determining that said command is a Standard Inquiry Command, and determining that said inquiry response in response to said Standard Inquiry Command is device configuration information for a device associated with said given one of at least one address.

10. A method as in claim 7, wherein said determining an inquiry response in response to a command sent to a given one of at least one address (108, 110, 112) on a computer hardware component (106) comprises determining an inquiry response based on a number of the following factors:
a. the type of command sent;
b. whether a device (114, 116, 118) associated with said given one of said at least one address (108, 110, 112) is a supported device;
c. whether said given one of said at least one address is a supported address; and
d. whether said device associated with a given one of said at least one address has the ability to respond to said command.
